# EUROPEAN PATENT APPLICATION

(11) **EP 3 398 798 A1**
(43) Date of publication of application: **07.11.2018**
(21) Application number: 18170621.9
(22) Date of filing: 03.05.2018
(51) Int. Cl.: B60H 1/34

(54) **AIR VENT FOR USE IN A VEHICLE**

(30) Priority: 03.05.2017 DE 202017102616 U
(71) Applicant: Illinois Tool Works Inc., Glenview, IL 60025 (US)
(72) Inventor: PACHER, Thomas, 67681 Sembach (DE)
(74) Representative: Hauck Patentanwaltspartnerschaft mbB

(57) **Abstract**

Air vent (10) for use in a vehicle, comprising:
- a housing (12) and an air duct (14), defined by the housing (12) and having an air inlet end (16) and an air outlet end (18), wherein an air flow, flowing through the air duct (14), can flow from the air inlet end (16) to the air outlet end (18) along a main direction of flow;
- at least one front air guide element (26), which is disposed at the air outlet end 18) in the air duct (14) and which is adjustable about a front axis of rotation (V1) relative to the main direction of flow (L);
- at least one rear air guide element (32, 34), which is disposed in the main direction of flow upstream of the front air guide element (26) in the air duct (14) and which is adjustable about a rear axis of rotation (H1, H2) relative to the main direction of flow;
- a control element (40), which is coupled to the at least one front air guide element (26) and to the at least one rear air guide element (32, 34) in such a way that by means of a movement of the control element (40) along a direction of motion (B1, B2), the front air guide element (26) can be rotated about the front axis of rotation (V1) and the rear air guide element (32, 34), about the rear axis of rotation (H1, H2).

## Description

The invention relates to an air vent for use in a vehicle, in particular, an automobile, as well as a vehicle with such an air vent. Air vents are used in vehicles, in particular, for ventilating the interior of vehicles. Known air vents have air guide elements for deflecting the air, flowing through the air vent, in variable directions.

Thus, for example, air vents comprising a plurality of air guide elements, which are arranged one behind the other in an air duct, are known from the prior art, with the air guide elements being used to deflect the air along different axes. The document DE 10 2013 210 055 B3 describes an air vent comprising air guide elements arranged one behind the other, where in this case the air guide elements are adjustable by means of a common operating element. The air vent comprises two curved air guide surfaces and a vane, wherein the position of the vane in an air duct can be adjusted by means of two coupling rods, so that the ratio of the volumetric flows, flowing over the respective air guide surfaces, is variable. Owing to this arrangement a deflection of the exiting air takes place upwards or downwards, based on a state installed in the vehicle. A lateral deflection of the outflowing air takes place by way of another set of vanes, which are located in the air duct behind the described arrangement. A slider acts by way of a complex linkage on both sets of vanes, so that by means of a horizontal movement of the slider the rear set of vanes and by means of a vertical movement of the slider the front set of vanes are adjustable independently of each other. Due to the multiple deflections of the outflowing air along different axes, the air flow is attenuated and, in addition, diffused by the time it leaves the nozzle. On the other hand, the linkage, which is necessary for adjusting the air guide elements, is complex and sophisticated in design.

Furthermore, roller nozzles are known as air vents. These roller nozzles comprise only one air guide element, which is designed as a roller and makes it possible to deflect air in all directions. The document DE 10 2009 043 961 B3 discloses, for example, a roller nozzle that has air discharge disks mounted on a curved shaft. In this case the air discharge disks are arranged at an angle to the shaft and can be rotated together with the shaft. Thus, in principle, a deflection of the outflowing air can take place in any direction, depending on the rotational position of the shaft. An adjustment of the shaft is carried out by rotating an operating wheel. However, owing to the position of the air discharge disks relative to the shaft, a deflection of the outflowing air to the sides takes place in a much more targeted manner than downwards and upwards, based on a state of the roller nozzle installed in the vehicle.

The object of the present invention is to provide an air vent, which enables a reliable deflection of the air in all directions in a compact design.

This object is achieved, according to the present invention, by means of an air vent in accordance with claim 1. Advantageous embodiments are the subject matter of the dependent claims, the description and the figures.

The inventive air vent for use in a vehicle comprises:
- a housing and an air duct, which is defined by the housing and has an air inlet end and an air outlet end, wherein an air flow, flowing through the air duct, can flow from the air inlet end to the air outlet end along a main direction of flow;
- at least one front air guide element, which is disposed at the air outlet end in the air duct and which is adjustable about a front axis of rotation relative to the main direction of flow;
- at least one rear air guide element, which is disposed in the main direction of flow upstream of the front air guide element in the air duct and which is adjustable about a rear axis of rotation relative to the main direction of flow;
- a control element, which is coupled to the at least one front air guide element and to the at least one rear air guide element in such a way that by means of a movement of the control element along a direction of motion, the front air guide element can be rotated about the front axis of rotation and the rear air guide element can be rotated about the rear axis of rotation.

Air, flowing through the air duct, passes through the air inlet end into the housing of the air vent and flows as far as the air outlet end, from which it can issue, for example, into the interior of a vehicle. Without having been deflected by means of the air guide elements, the air, flowing through the air duct, flows along the main direction of flow. The at least one front air guide element and the at least one rear air guide element are adjustable with respect to the main direction of flow in such a way that the free cross section of the air duct is changed. Therefore, an adjustment of the front and rear air guide element can cause the air, flowing through the air duct, to be deflected from the main direction of flow. For this purpose the at least one front air guide element is adjustable about its front axis of rotation; and the at least one rear air guide element is adjustable about its rear axis of rotation. The front axis of rotation and/or the rear axis of rotation can be arranged, in particular, perpendicular to the main direction of flow. It is possible to provide a plurality of front air guide elements, which are adjustable about their front axis of rotation. It is even possible to provide a plurality of rear air guide elements, which are adjustable about their rear axis of rotation. For example, two rear air guide elements may be provided, wherein the first rear air guide element can be adjustable about a first rear axis of rotation; and the second rear air guide element can be adjustable about a second rear axis of rotation with respect to the main direction of flow. First and rear axis of rotation may run parallel to each other.

The at least one front air guide element and the at least one rear air guide element are coupled to a control element; i.e., they are operatively connected to the control element. By means of the control element the front air guide element or the rear air guide element can be adjusted in the air flow with respect to the main direction of flow. In this case a movement of the control element along a predetermined direction of motion causes, in particular, a rotational movement of the air guide elements about their respective axis of rotation. In this context the control element can act on the respective rotary shafts of the air guide elements, with said rotary shafts forming the respective axes of rotation. Thus, the at least one front air guide element may comprise at least one front rotary shaft, which extends along the front axis of rotation, so that the at least one front air guide element is adjustable about the front axis of rotation by means of the at least one front rotary shaft. Correspondingly the at least one rear air guide element may comprise at least one rear rotary shaft, which extends along the rear axis of rotation and by means of which the at least one rear air guide element is adjustable about the rear axis of rotation with respect to the main direction of flow. If a plurality of front or rear air guide elements were to be provided, then, in particular, each one may comprise such a rotary shaft.

According to the present invention, a movement of the control element along, in particular, exactly one direction of motion, may cause both the at least one front air guide element and the at least one rear air guide element to move. It may be provided that by means of the control element the at least one front air guide element and the at least one rear air guide element are moved together i.e., simultaneously, at least in sections. It may also be provided that the control element is adjustable only along two opposite directions of motion. The control element may be adjustable, for example, along a first direction of motion and along a second direction of motion, which is in the opposite direction of the first direction of motion. It may also be provided that the control element is adjustable only along exactly one direction of motion. The control element may be designed in such a way that it can be moved translationally along the direction(s) of motion. Preferably the control element is designed in such a way that it can be moved about an axis of rotation along a first direction of rotation and along an opposite second direction of rotation. It is also conceivable that the control element is rotatable about the axis of rotation only along one direction.

Owing to the control element of the invention the air vent is particularly compact and easy to operate. In order to move not only the at least one front, but also the at least one rear air guide element, the control element does not have to be adjusted in multiple directions, but rather only along one direction of motion. In addition, due to the coupling of the at least one front air guide element and the at least one rear air guide element to the control element, the air guide elements can be moved relative to each other by means of a movement of the control element along predetermined positions. Therefore, depending on the position, in which the air guide elements are moved relative to each other by the control element, an air deflection can take place in various directions. Thus, it is possible for the air to be deflected in any direction by means of only one control element. Since the air guide elements are always arranged in predetermined positions relative to each other in the manner described above, the air deflection takes place in a particularly targeted manner, so that it is possible to avoid that a diffuse air flow will issue from the air vent.

According to one embodiment, the at least one front air guide element and/or the at least one rear air guide element is/are formed by means of at least one oblong, flat lamella, which can be inclined into the air flow. The at least one lamella may extend along its length from one side of the air duct to the other and may be mounted on the air duct by means of at least one rotary shaft. Such lamellae are well-known. Owing to an inclination about the rotary shaft, such a lamella can change the free cross section of the air duct and, in so doing, deflect the air, flowing through the air duct, from the main direction of flow. Such lamellae allow the air to be deflected along one axis, for example, upwards or downwards, based on a state of the air vent installed in the vehicle.

According to an additional embodiment, the control element is a control wheel that can be rotated about an axis of the wheel. Then the directions of motion may be directions of rotation, so that the control wheel can be moveable about its wheel axis along a first direction of rotation and along an opposite second direction of rotation. The control wheel may be circular. However, the control wheel may also deviate from the circular shape. For example, said control wheel could have the shape of a rectangle, in particular, an octagon. In principle, the control wheel may be controllable by hand and/or by means of an electric motor. For a manual control the control wheel can be controllable, for example, by means of a hand wheel. The control wheel itself may also form a hand wheel, which can be rotated by hand.

According to another embodiment, the air vent comprises a coupling element having an engagement projection, which is in engagement with a guide groove, extending in the control wheel, and at least one pivot element, which is operatively connected to the coupling element and acts on the at least one front air guide element and/or the at least one rear air guide element, wherein through rotation of the control wheel the engagement projection of the coupling element is guided in the guide groove in such a way that the at least one pivot element can rotate the at least one front air guide element about the front axis of rotation and/or can rotate the at least one rear air guide element about the rear axis of rotation. By guiding the engagement projection in the guide groove of the control wheel, a movement of the coupling element takes place. The coupling element in turn acts on the at least one pivot element, so that by means of a movement of the coupling element, the at least one pivot element is also moved. A movement of the at least one pivot element in turn leads to a rotational movement of the at least one front air guide element about the front axis of rotation and/or leads to a rotational movement of the at least one rear air guide element about the rear axis of rotation. In this case the at least one front air guide element comprises, as explained above, at least one front rotary shaft; and the at least one rear air guide element comprises at least one rear rotary shaft, as explained above. Then the at least one pivot element can act on the at least one front rotary shaft and/or the at least one rear rotary shaft.

By means of a rotational movement of the control wheel along the direction of motion, the at least one front air guide element is adjusted, depending on the configuration of the guide groove in the control wheel, about the front axis of rotation; and/or the at least one rear air guide element is adjusted about the rear axis of rotation with respect to the main direction of flow. As a result, the at least one front air guide element and/or the at least one rear air guide element can be moved into different, predetermined positions with respect to each other, as a function of the configuration of the guide groove. For example, for this purpose not only the at least one front air guide element, but also the at least one rear air guide element can be operatively connected to the coupling element by means of a pivot element. In this case both the movement of the front and the rear air guide element as well is defined by means of the guide groove. It can also be provided that only the at least one front air guide element or the at least one rear air guide element is operatively connected to the coupling element by means of at least one pivot element. In this case the movement of either the front or the rear air guide element is determined by means of the guide groove. The air guide element(s), the movement of which is not determined by means of the guide groove, can be operatively connected to the control wheel in some other way. In any case both the front air guide element and the rear air guide element can be rotated by turning the control wheel in a direction of rotation. The aforementioned embodiments allow a very compact design of the air vent or, more specifically, its control mechanism and a design-efficient realization of the joint controllability of the air guide elements by means of the control wheel.

The coupling element may be formed, in particular, so as to be L-shaped with two linearly extending connecting sections that are perpendicular to each other. The engagement projection may be arranged on a first connecting section, while a second connecting section comprises the at least one guide opening. According to another embodiment, the coupling element is moved by guiding its engagement projection in the guide groove of the control wheel in essence along an axis that is perpendicular to the front axis of rotation and/or the rear axis of rotation, wherein the at least one pivot element comprises at least one pin that is received in at least one guide opening of the coupling element. The at least one pivot element is operatively connected to the coupling element by guiding its at least one pin in the at least one guide opening of the coupling element. Rotation of the control wheel leads, as explained, to a movement of the engagement projection of the coupling element in the guide groove. In particular, the coupling element may be moved in essence along an axis that is perpendicular to the front axis of rotation and/or the rear axis of rotation. This axis of motion of the coupling element can also be perpendicular to the main direction of flow. Thus, in the state of the air vent installed in the vehicle, the coupling element can move up and down perpendicular to the horizontal. The coupling element may be held on this perpendicular axis of motion by means of suitable guide means.

According to an additional embodiment, the guide groove comprises at least one first segment that is designed in such a way that by guiding the engagement projection of the coupling element along this segment, the coupling element is not moved in essence. Furthermore, the guide groove may comprise at least one second segment that is designed in such a way that by guiding the engagement projection of the coupling element along this segment, the coupling element is moved. Consequently the guide groove of the control wheel may comprise a plurality of segments that, upon turning the control wheel, do, in fact, guide the engagement projection of the coupling element, but do not give rise to a movement of the coupling element. Despite the fact that the engagement projection is guided in the guide groove of the control wheel, it is possible to achieve a non-movement of the coupling element by, for example, having the at least one first segment of the guide groove extend along a circular arc, where in this case the center of the circle is on the axis of rotation of the control wheel. Inside the first segment the radial distance of the engagement projection from the axis of rotation of the control wheel does not change. However, a movement of the engagement projection along the second segment results in a change in the radial distance of the engagement projection from the axis of rotation of the control wheel. This leads to a movement of the engagement projection and the coupling element. The guide groove of the control wheel may be designed in essence in a heart shape.

Furthermore, it can be provided, as stated above, that either the at least one front air guide element or the at least one rear air guide element is connected to the guide groove of the control wheel by means of the coupling element, while the respective other air guide element is connected to the control wheel in a different way. The at least one air guide element, which is connected to the control wheel in a different way, can always be adjusted, in particular, rotated, for example, by rotation of the control wheel, while the air guide element, which is operatively connected to the control wheel by means of the coupling element, is moved only if the engagement projection passes through at least one second segment. In this way only one of the air guide elements can be moved despite the coupling of the at least one front and the at least one rear air guide element at least in sections.

According to an associated embodiment, a front rotary shaft of the at least one front air guide element extends along the front axis of rotation and is in engagement with the control wheel. In particular, the control wheel can be arranged on the front rotary shaft. Thus, by turning the control wheel about its axis of rotation there will be a rotation of the front rotary shaft and, thus, the at least one front air guide element about the front axis of rotation.

According to an additional embodiment, the at least one front air guide element is formed by means of a roller vent comprising a plurality of lamellae, which are arranged along the front rotary shaft and are at an angle to the front rotary shaft. In this case the lamellae are permanently connected to the front rotary shaft. For example, by turning the control wheel a rotation of the roller vent will then occur. As a result, the lamellae, which are arranged along the front rotary shaft of the roller vent, are in turn adjusted with respect to the main direction of flow in various ways so that the free cross section of the air duct is changed by the lamellae in various ways. Depending on the rotational position of the roller vent, a deflection of the air, flowing through the air duct, may occur in any direction. In this case a deflection of the air takes place along the front rotary shaft in a much more targeted manner than perpendicular to the front rotary shaft, as explained in the introductory part. It is possible to compensate for this drawback by arranging at least one rear air guide element in the main direction of flow upstream of the roller vent, in order to deflect the air perpendicular to the front rotary shaft of the roller vent. In this case the at least one rear air guide element may be formed, in particular, by at least one oblong, flat lamella.

According to another embodiment, the air vent comprises a slot-shaped air outlet opening, which is arranged at the air outlet end of the air duct and which is formed by converging inner walls of the housing. In this context the term slot-shaped means that the cross sectional area of the air duct is smaller in the region of the air outlet opening. As a result, the air flow, issuing from the air duct, may be better directed. If, for example, an oblong, flat lamella, which makes it possible to deflect the air flow, flowing through the air duct, along an axis that is perpendicular to the main direction of flow, is provided as the at least one rear air guide element, then the air flow, which is deflected in such a way, can be directed towards at least one of the converging inner walls. This leads to a rerouting of the air flow before it issues from the slot-shaped air outlet opening. If, based on an installed state in a vehicle, the air flow is deflected downwards by means of the at least one rear air guide element, then a lower inner wall of the housing deflects, based on its converging shape, the air flow in turn upwards, so that an upwards directed air flow leaves the air outlet opening. Correspondingly the at least one rear air guide element can deflect the air flow upwards and, in so doing, can direct said air flow to an upper inner wall of the housing; and said inner wall in turn deflects, based on its converging shape, the air flow downwards, so that a downwards directed air flow leaves the air outlet opening. The advantage of such a rerouting is that a highly directed air flow can issue from the air vent.

In this case, in particular, a roller vent is suitable as the front air guide element. Then it may also be provided that the converging inner walls of the housing extend along a circular arc and that the lamellae of the roller vent move along a corresponding circular arc when the front axis of rotation rotates. In this way the lamellae of the roller vent are guided close to the inner walls of the housing. As a result, a reliable deflection of the air by means of the roller vent takes place. Furthermore, it may be provided that the cross sectional area of the air duct widens along the main direction of flow. In this way an especially large roller vent can be accommodated at the air outlet end, an aspect that in turn leads to a better deflection of the air.

According to another embodiment, the cross sectional area of the air duct, said cross sectional area being perpendicular to the main direction of flow, widens along the front and/or the rear axis of rotation. The cross sectional area of the air duct may be, for example, trapezoid-shaped. Then a roller vent, which can rotate about a front rotary shaft, can be provided as the front air guide element; and said roller vent comprises a plurality of lamellae, which are arranged along the front rotary shaft and which become correspondingly larger along the front axis of rotation in conformity with the cross section of the air duct. In a vehicle a larger amount of air can be directed in this way to, for example, the side windows of the vehicle.

According to an additional embodiment, the control element acts by way of a gearwheel mechanism on the front axis of rotation and/or the rear axis of rotation. Such a gearwheel mechanism may be provided, in particular, as an alternative to a guide groove in the control wheel. If the control element is provided on the control wheel, then, for example, a gearwheel, arranged on the control wheel, can mesh with a second gearwheel, which is connected to a rotary shaft of the at least one front air guide element and/or the at least one rear air guide element.

The invention also relates to a vehicle comprising an air vent of the invention. Then the front axis of rotation and/or the rear axis of rotation may extend horizontally.

The invention is explained below with reference to the figures. The schematic drawings show in
- Figure 1: an inventive air vent, according to a first exemplary embodiment, in a perspective view;
- Figure 2: the air vent from Figure 1 in an exploded view;
- Figure 3: the air vent from Figure 1 with upwards directed rear air guide elements, with the housing and the roller vent not being shown for illustrative reasons;
- Figure 4: the air vent from Figure 3 with downwards directed rear air guide elements;
- Figure 5: the air vent from Figure 4 together with the roller vent in a perspective view;
- Figure 6: the air vent from Figure 5 in a second perspective view with horizontally directed rear air guide elements;
- Figure 7: the air vent from Figure 1 in a side view, looking at the control element;
- Figure 8: the air vent from Figure 1 in a lateral sectional view with upwards directed rear air guide elements;
- Figure 9: the air vent from Figure 1 in a lateral sectional view with horizontally directed rear air guide elements;
- Figure 10: the air vent from Figure 1 in a lateral sectional view with downwards directed rear air guide elements;
- Figure 11: an air vent, according to a second embodiment, with a control element with a gearwheel mechanism;
- Figure 12: an air vent, according to a third embodiment, with a laterally expanding air duct in a frontal view; and
- Figure 13: the air vent from Figure 12 in a sectional view along the intersecting axis C-C, marked in Figure 12.

Unless stated otherwise, the identical reference numerals in the figures denote the same objects.

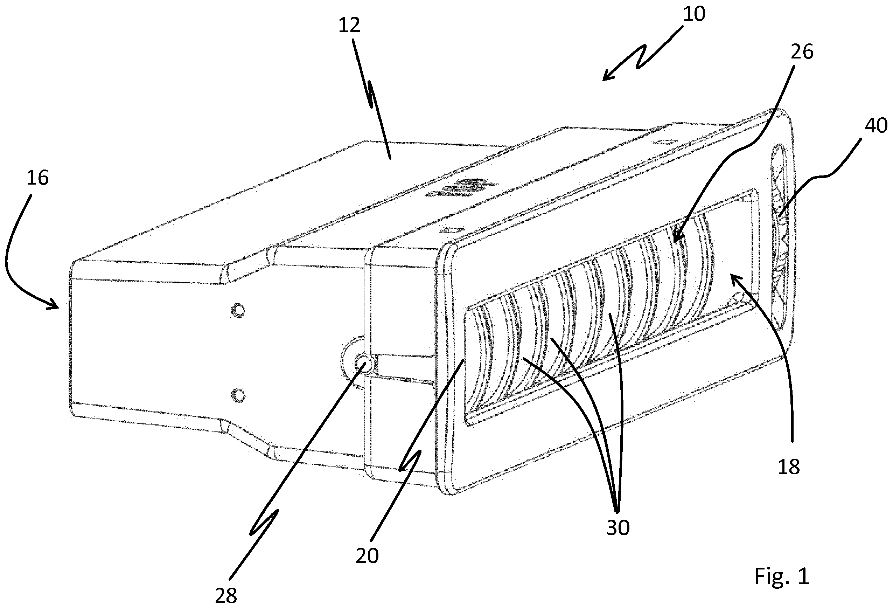

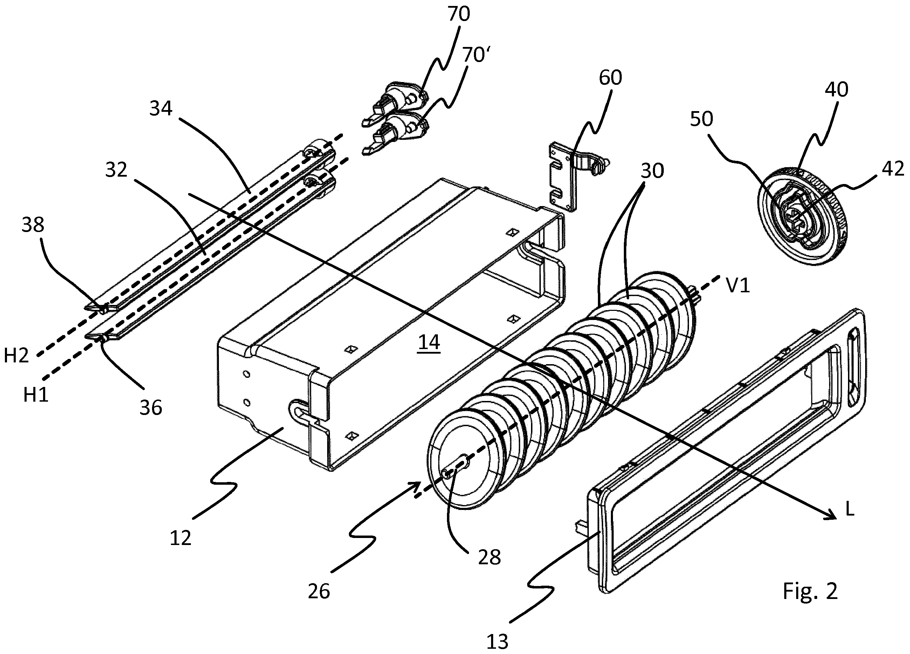

Figures 1 and 2 show an air vent 10 comprising a housing 12 and an air duct 14, defined by the housing 12. The air duct 14 has an air inlet end 16 and an air outlet end 18 and at its air outlet end 18 leads into a slot-shaped air outlet opening 20, which is formed by converging inner walls 22, 24 of the housing. The inner walls 22, 24 of the housing are formed at a front panel 13, which is a part of the housing. In the air duct 14 a roller vent 26 is arranged at the air outlet end 18; and said roller vent is mounted on the corresponding holders of the housing 12 in a manner allowing rotation about a front axis of rotation V1 by way of a front rotary shaft 28; and said roller vent comprises a plurality of lamellae 30 that are arranged along the front rotary shaft 28 and are at an angle thereto. L denotes a main direction of flow of the air flow, flowing through the air duct from the air inlet end 16 to the air outlet end 18.
Upstream of the roller vent 26, there are two rear air guide elements 32, 34 in the air duct 14. The rear air guide elements 32, 34 are each formed by means of an oblong, flat lamella 32, 34. The lamellae 32, 34 extend in each case from one side of the air duct 14 to the other. The lamella 32 comprises a first rear rotary shaft 36, which extends along a first rear axis of rotation H1. The lamella 32 is adjustable with respect to the main direction of flow L about the first rear axis of rotation H1. The lamella 34 is formed identically and comprises a second rear rotary shaft 38, which extends along a second rear axis of rotation H2. The lamella 34 is adjustable with respect to the main direction of flow L by means of the second rear axis of rotation H2. The axes of rotation VI, HI, H2 and, consequently, the rotary shafts 28, 36, 38 are aligned perpendicular to the main direction of flow L. In the installed state of the air vent, all of these axes or shafts are arranged parallel to each other and extend horizontally.

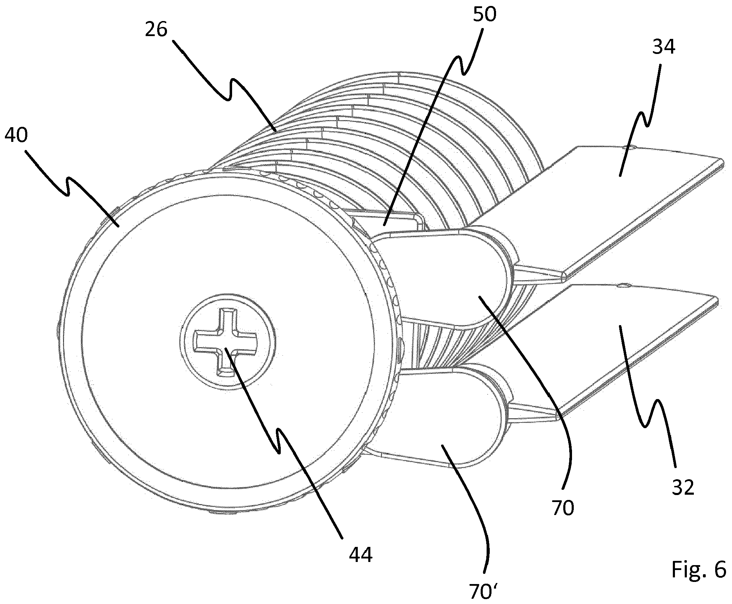

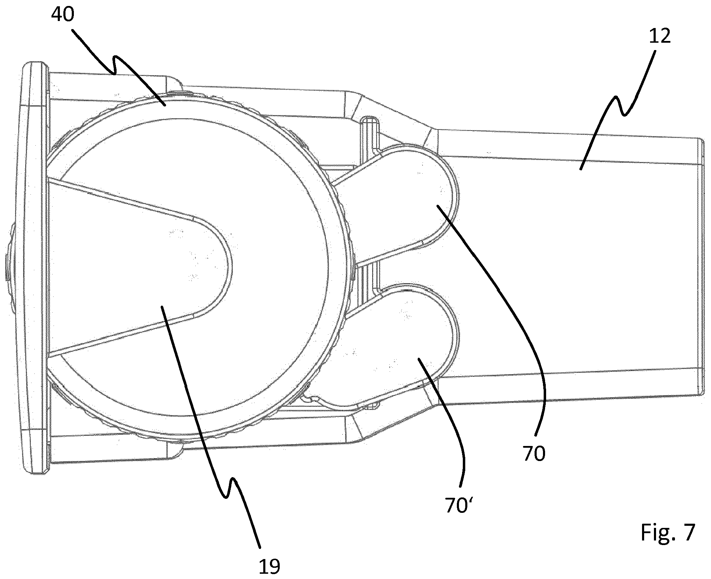

Furthermore, the air vent 10 comprises a control wheel 40, which comprises a cross-shaped receiving opening 42 and a guide groove 50. The rotary shaft 28 of the roller vent 26 is designed so as to be cross shaped at one end in conformity with the cross-shaped recess 42; and the roller vent 26 is connected to the recess 42 by way of the rotary shaft 28. An axis of rotation of the control wheel 40 coincides with the rotary shaft 28 and, thus, the axis of rotation VI, so that the roller vent 26 can be rotated about the axis of rotation V1 by means of the control wheel 40. Furthermore, a coupling element 60 and two pivot elements 70 are provided, by means of which the lamellae 32, 34 are in engagement with the guide groove 50 of the control wheel 40. The control wheel 40 is held at the housing 12 by means of a holder 19, where in this case the holder 19 engages a second cross-shaped recess 44 of the control wheel 40, as can be seen in Figures 6 and 7.

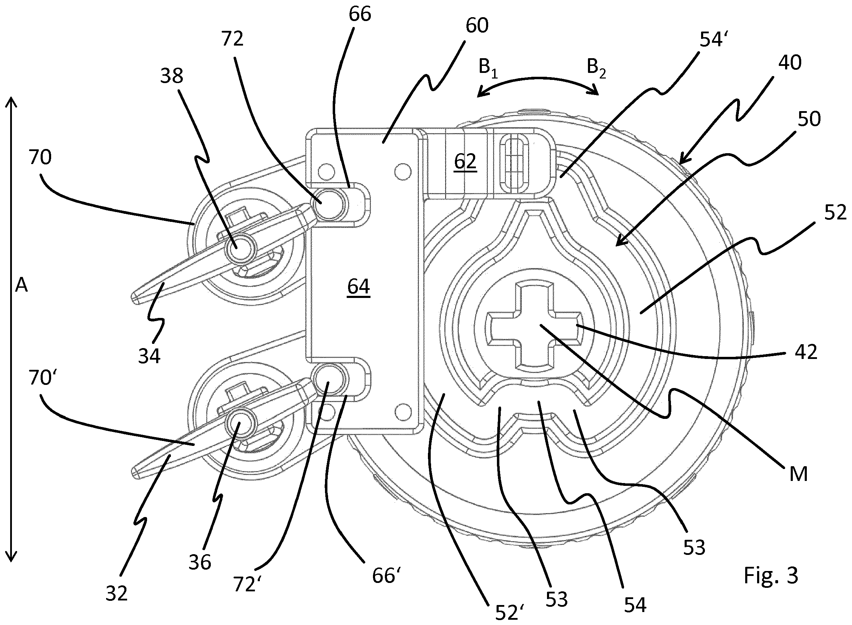

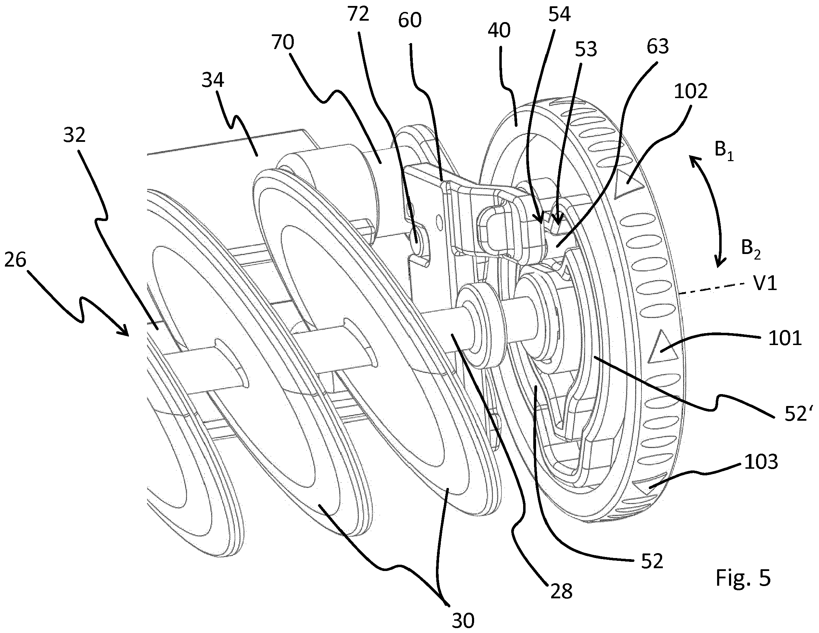

Figures 3 to 5 show in detail the movement mechanism of the air guide elements of the air vent. The coupling element 60 is designed so as to be L shaped. The coupling element 60 comprises a first connecting section 62 with an engagement projection 63, which is in engagement with the guide groove 50 of the control wheel 40, as can be seen, in particular, in Figure 5. A second connecting section 64 of the coupling element 60 comprises two guide openings 66, 66', each for receiving a respective pin 72, 72' of the pivot elements 70, 70'. The pivot element 70 is connected to the rotary shaft 38 of the lamella 34, while the pivot element 70' is connected to the rotary shaft 36 of the lamella 32. The guide groove 50 is designed so as to be heart shaped with two first segments 52, 52', four second segments 53 and two additional segments 54, 54'. The segment 54 lies radially further inwards, i.e., closer to the axis of rotation of the control wheel 40 than the segments 52, 52'. The axis of rotation extends through the center M of the control wheel 40. The segment 54' in turn lies radially further outwards than the segments 52, 52'. The segments 53 connect the segments 52, 52', 54, 54' to each other to form a closed curved track, so that the control wheel 40 can also be rotated beyond 360°.The first segments 52, 52' run at a constant distance from the center M of the control wheel 40 along circular arcs, while the second segments 53 exhibit a changing distance from the center M of the control wheel 40.

By means of a movement of the control wheel 40, both the roller vent 26 and the two lamellae 32, 34 can be moved. By rotation of the control wheel 40, the roller vent 26 is, on the one hand, rotated about the front axis of rotation V1. For this purpose the roller vent 26 is connected with its rotary shaft 28 to the recess 42 of the control wheel 40, as can be seen, in particular, in Figure 5. On the other hand, the lamellae 32, 34 can be pivoted by turning the control wheel 40. At the same time the engagement projection 63 of the coupling element 60 is guided inside the guide groove 50 and changes at least in sections the distance between the engagement projection 63 and the center M of the control wheel 40. As a result, the coupling element 60 is moved. The movement of the coupling element 60 occurs more or less along a perpendicular axis of motion A. On this axis of motion A the coupling element 60 is limited, in particular, by the coupling of the guide openings 66, 66' to the pins 72, 72' of the pivot elements 70, 70'. However, a slight compensating movement of the coupling element 60 in the direction of the pivot elements 70, 70', i.e., perpendicular to the axis of motion A, is conceivable. By means of a movement of the coupling element, the pins 72, 72' are guided into the two guide openings 66, 66'. The movement of the pivot elements 70, 70' follows in each case a circular arc. This, in turn, leads to a rotation of the rotary shafts 36, 38 and, thus, to an adjustment of the lamellae 32, 34. Since the pins 72, 72' move in each case along a circular arc, the guide openings 66, 66' are designed so as to be oblong, in order to give the pins 72, 72' sufficient clearance of motion. In this way, too, the aforementioned compensating movement of the coupling element 60 in the direction of the pivot elements 70, 70' is also possible. The different positions of the control wheel 40 and the lamellae 32, 34 are explained in detail below.

Figure 3 shows the lamellae 32, 34 inclined upwards. For the sake of clarity the housing and the roller vent are not shown in this figure. The control wheel 40 is shown in a first position, where in this case the engagement projection 63 is inside the segment 54' of the guide groove 50. Inside the segment 54' there is the engagement projection 63 at the maximum distance possible from the center of the control wheel 40, so that the coupling element 60 is adjusted maximally upwards. At this point the control wheel 40 may be rotated about the front axis of rotation V1 and, thus, along a first direction of motion B₁ or in the opposite direction, along a second direction of motion B₂. When the control wheel 40 is rotated along one of the directions of motion B₁, B₂, the engagement projection 63 of the coupling element 60 follows the guide groove 50, arranged in the control wheel 40, and reaches by way of one of the segments 53 the segment 52 or the segment 52', depending on the direction of rotation. During the transition of the engagement projection 63 from the segment 54' into the segment 52 or the segment 52', i.e., inside one of the segments 53, the coupling element 60 moves along the axis A downwards, since the engagement projection 63 is moved closer to the center of the control wheel 40. Hence, the lamellae 32, 34 are pivoted into a horizontal position (not illustrated) by means of the pins 72, 72'.

The lamellae 32, 34 remain in this horizontal position, as long as the engagement projection 63 remains inside one of the segments 52, 52'. If the control wheel 40 is rotated further, then the engagement projection 63 moves along one of the segments 52, 52'. To put it more precisely, the respective segment 52, 52' moves relative to the engagement projection 63, while the engagement projection 63 stays at the same distance from the center M of the control wheel 40. This is due to the fact that both the segment 52 and the segment 52' extend along a circular arc concentrically to the control wheel 40, i.e., at a constant distance from the center M of the control wheel 40. Therefore, a movement of the control wheel 40 does not result in a movement of the coupling element 60, as long as the segments 52, 52' are traversed. Consequently in this case even the pivot elements 70, 70' and, thus, the lamellae 32, 34 are not moved. Consequently the lamellae 32, 34 remain in the horizontal position.

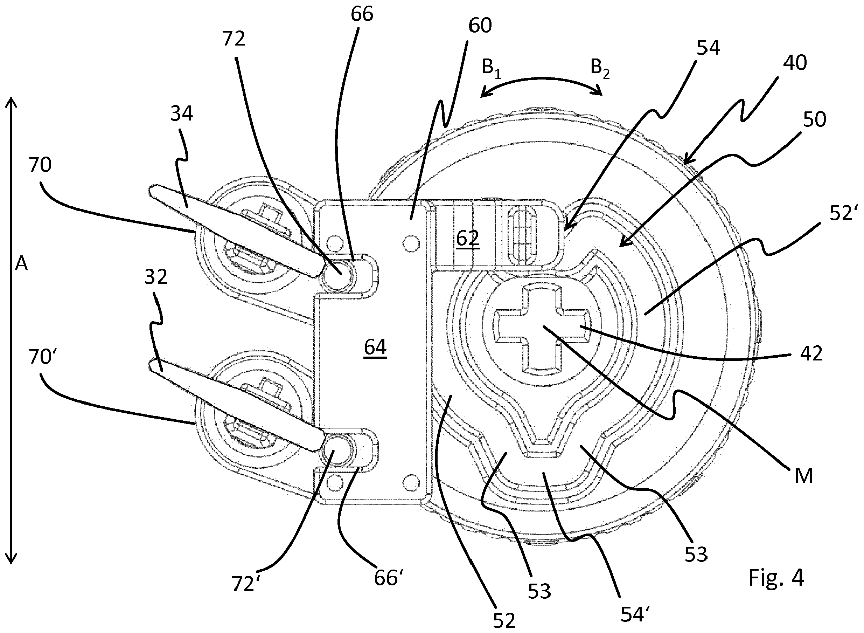

If the control wheel 40 is rotated further, then the engagement projection 63 is transferred from the segment 52 or the segment 52' by way of one of the segments 53 into the segment 54 and, thus, closer to the center M of the control wheel 40. In this way the coupling element 60 continues to move downwards along the axis A, as a result of which the lamellae 32, 34 in turn are pivoted downwards by means of the pivot elements 70, 70', as can be seen in Figure 4. This position of the control wheel 40 is also shown in Figure 5, where in this case the roller vent 26 can also be seen.

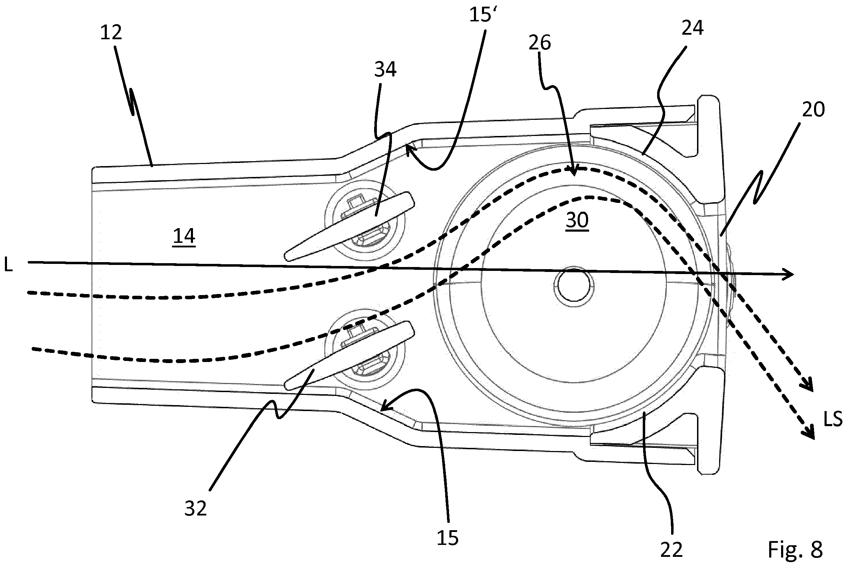

Owing to the described coupling of the control wheel 40 to the roller vent 26 and to the lamellae 32, 34, a movement of the control wheel 40 along only one direction of motion B₁ or B₂ may cause both the front air guide element, i.e., the roller vent 26, to rotate about the front axis of rotation V1 and the rear air guide elements, i.e. the lamellae 32, 34, to rotate about their respective rear axis of rotation HI, H2. In this way the roller vent 26 and the lamellae 32, 34 are brought into different, predetermined positions in reference to each other. At the same time the roller vent 26 and the lamellae 32, 34 always act together in such a way that an air flow LS, guided through the air duct 14, is optimally directed, as explained in detail below with reference to Figures 8 to 10.

Figure 8 shows a cross section of the air duct 14 along the main direction of flow L. The lamellae 32, 34 are directed at an angle upwards, in conformity with the position shown in Figure 3. It can be seen, how the air flow LS, guided through the air duct 14, is deflected upwards in the direction of the upper inner wall 24 of the housing by means of the lamellae 32, 34. Owing to the converging shape of the inner wall 24 of the housing, the air flow LS, directed towards the inner wall 22 of the housing, is in turn deflected downwards before issuing from the slot-shaped air outlet opening 20. Owing to the elucidated coupling of the control wheel 40 to the lamellae 32, 34 and the roller vent 26, the lamellae 30 of the roller vent 26 are positioned by suitably rotating the rotary shaft 28 in such a way that the roller vent 26 hardly impedes the air flow LS. At the level of the lamellae 32, 34 the air duct 14 becomes wider along the main direction of flow L. The resulting, more inclined section 15' of the air duct 14 also promotes the guidance of the air, so that air, flowing above the lamella 34, is guided accordingly.

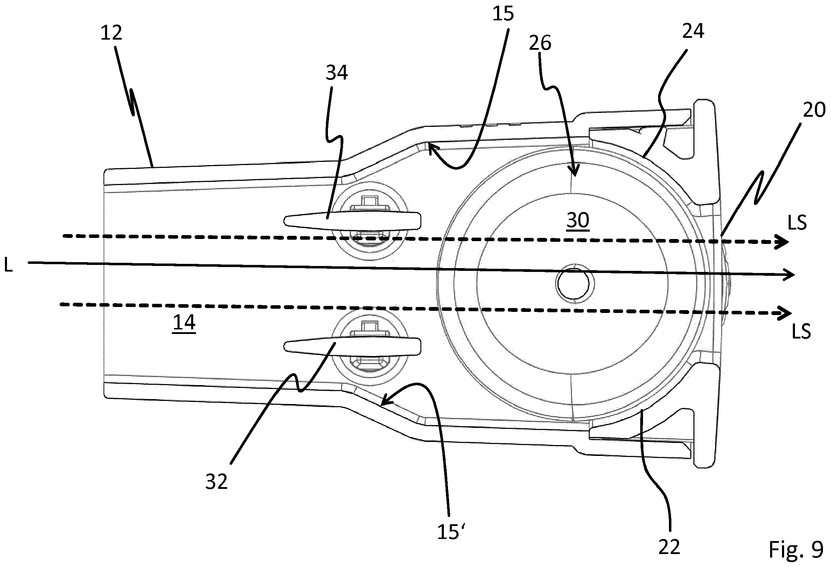

In Figure 9 the control wheel 40 was adjusted by 90° with respect to the position, shown in Figure 8, along one of the directions of rotation B₁, B₂. As a result, the lamellae 32, 34 are rotated by approximately 45° with respect to the position, shown in Figure 8, about their respective axes of rotation HI, H2 and are now parallel to the air flow LS. Therefore, in the state of the air vent installed in the vehicle, the lamellae are aligned horizontally. This position is achieved by rotation of the control wheel 40, starting from the position shown in Figure 3, along one of the directions of motion B₁, B₂. In so doing, as explained above, the engagement projection 63 passes from the segment 54' into one of the segments 52, 52' of the guide groove 50. In this orientation essentially no deflection of the air flow LS from the main direction of flow L takes place by means of the lamellae 32, 34. However, a deflection of the air flow LS by means of the roller vent 26 does take place. Said roller vent is also moved by rotation of the control wheel 40 and, in particular, is rotated about the front axis of rotation V1. Together with the control wheel 40, the roller vent 26 was rotated by 90° with respect to the position, shown in Figure 8. At this point the roller vent 26 deflects the air flow LS laterally. If the engagement projection 63 is, for example, in the segment 52', then the lamellae 30 of the roller vent 26 deflect, when looking to the left, the air flow LS along the main direction of flow L. If the engagement projection 63 is in the segment 52, then the lamellae 30 of the roller vent 26 deflect, when looking to the right, the air flow LS along the main direction of flow L. Consequently, in the position of the air guide elements 32, 34, shown in Figure 9, a deflection of the air flow laterally to the left or right, i.e., into the drawing plane or out of the drawing plane, can be achieved as a function of the position of the roller vent 26.

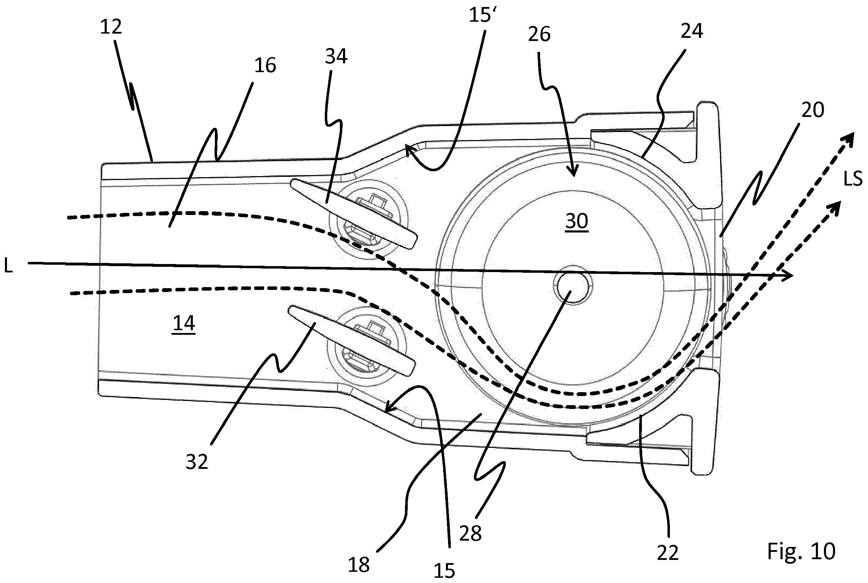

Figure 10 shows the control wheel 40 rotated by another 90° along one of the directions of motion B₁, B₂. As a result, the lamellae 32, 34 are inclined downwards by another 45° The result is a deflection of the air flow LS by the lamellae 32, 34 downwards in the direction of the inner wall 22 of the housing. Said inner wall of the housing deflects the air flow LS in turn upwards, so that an upwards directed air flow LS issues from the slot-shaped air outlet opening 20. In this position the lamellae 30 of the roller vent 26 are aligned in such a way that they hardly impede the air flow. An inclined section 15 of the air duct 14 also promotes the guidance of the air. For this purpose the control wheel 40 was rotated into the position, shown in Figure 4. This position of the control wheel 40 is also shown in Figure 5.

In the position of the control wheel 40, shown in Figure 5, the lamellae 32, 34 are directed downwards, since the engagement projection 63 of the coupling element 60 is in the segment 54 of the guide groove 50. As a result, a deflection of the air flow takes place first downwards against the lower inner wall 22 of the housing; and this inner wall of the housing in turn deflects the air flow upwards. Consequently an upwards directed air flow issues from the air outlet opening 20. This situation can be seen at the control wheel 40 that is designed as a hand wheel in the present example. The arrow symbol 101, affixed on the outer periphery of the control wheel, points upwards. In this situation the lamellae 30 of the roller vent 26 are directed in such a way that they have as little impact on the air flow as possible. That means that they decrease the free cross section of the air duct only by a minimum amount.

If at this point the control wheel 40 is adjusted along the direction of motion B₁, until the arrow symbol 103 reaches the position of the arrow symbol 101, then the lamellae 30 of the roller vent 26 rotate into the air flow in such a way that said air flow is easily deflected to the right. Correspondingly the engagement projection 63 is guided along the guide groove 50 in the direction of the segment 52', but without having already entered into the segment 52'. The engagement projection 63 can still be in the segment 54 or already in the segment 53. At a minimum the lamellae 32, 34 direct the air flow in this position further downwards, an aspect that in interaction with the roller vent 26 will then result in the air exiting upwards to the right. This situation is indicated by the arrow symbol 103. If the control wheel 40 is turned further in the direction B₁, the engagement projection will then reach the segment 52', so that essentially the lamellae 32, 34 will no longer cause the air to be deflected. At this point the air flow is only deflected by the lamellae 30 of the roller vent 26. Depending on the position of rotation, the roller vent can also produce, in addition to the lateral deflection, a deflection upwards or downwards. However, this is quite weak.

If the control wheel, starting from the position shown in Figure 5, is rotated along the direction of motion B₂, until the arrow symbol 102 reaches the position of the arrow symbol 101, then the lamellae 30 of the roller vent 26 rotate into the air flow in such a way that said air flow is deflected to the left. Correspondingly the engagement projection 63 is guided along the guide groove 50 in the direction of the segment 52, but without having already entered into the segment 52. Consequently the lamellae 32, 34 continue to direct the air flow downwards, an aspect that in interaction with the roller vent 26 will then result in the air exiting upwards to the left. This situation is indicated by the arrow symbol 102. If the control wheel 40 is turned further in the direction B₂, the engagement projection will then reach the segment 52, so that essentially the lamellae 32, 34 will no longer cause the air to be deflected. The air flow in turn is only deflected by the lamellae 30 of the roller vent 26, but this time to the other side.

Due to the configuration of the guide groove 50 in the control wheel 40, it is extremely easy to jointly control the lamellae 32, 34 and the roller vent 26. By means of a joint movement of the control wheel 40 along one direction of motion, it is possible to move the front and rear air guide elements relative to each other in all of the requisite positions that allow a deflection of the air flow in all direction. Since the guide groove 50 forms a closed track, the control wheel 40 can also be rotated beyond 360°. As a result, the control wheel 40 can reach any arbitrary rotational position, even if said control wheel is rotated only along one of the directions of motion B₁, B₂.

The aforementioned explanations make it clear that a movement of the coupling element 60 is caused in essence only by means of a movement of the engagement projection along the segments 53. In the segments 52, 52' there is virtually no movement of the coupling element 60, since the distance from the center M of the control wheel 40 remains constant, as explained above. In the segments 54, 54' there is in any event a slight movement of the coupling element 60, since in this case, too, the distance from the center M of the control wheel 40 remains more or less constant.

However, the air guide elements 32, 34, shown in the figures described, may also be designed in a different way. In principle, the two air guide elements 32, 34 can be coupled directly, where in this case one of the pivot elements 70, 70' engages directly the guide groove 50. Then in this case, in particular, there would be no need for a coupling element 60, an aspect that simplifies the design. Instead, as a coupling element, it would be possible to provide, for example, a coupling rod. For this purpose the air guide elements have preferably mushroom heads, on which the coupling rod is mounted; and, thus, a control of at least one of the coupled air guide elements is ensured.

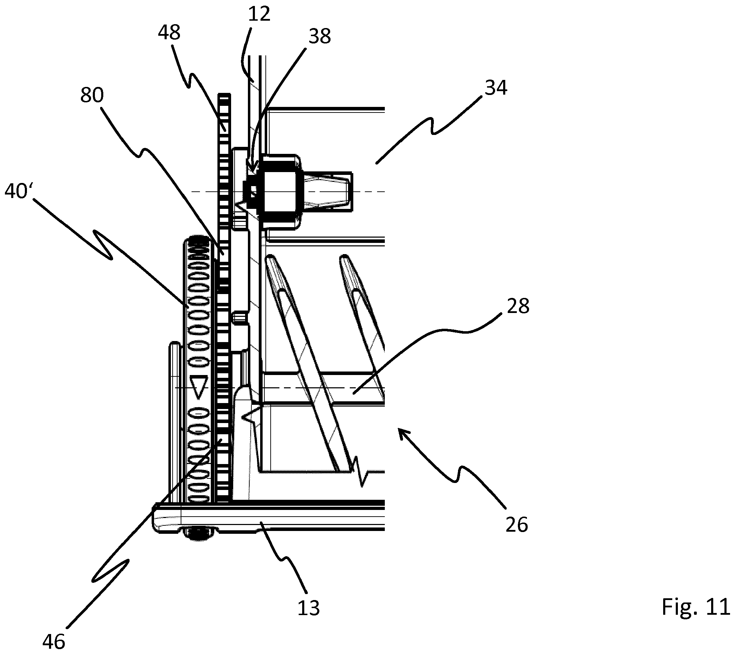

Figure 11 shows a second embodiment of the air vent. In this case the control wheel 40' does not comprise a guide groove, but rather a gearwheel 46. The gearwheel 46 meshes with a gearwheel 48, which is connected to the rear rotary shaft 38, by means of another gearwheel 80. Therefore, in this embodiment no coupling element and no pivot elements are provided. By rotation of the control wheel 40', the gearwheels 46, 80, 48 act as a gearwheel mechanism on the rotary shaft 38, an aspect that leads to a rotation of the lamella 34. The rotary shaft 36 can be driven accordingly, so that the lamella 38 is also rotated. With its rotary shaft 28 the roller vent 26 engages centrally with the control wheel 40', as in the embodiment described above. A movement of the roller vent and the lamellae can also be achieved by means of such a gearwheel mechanism. Preferably in this embodiment the control wheel 40' can be rotated only by 180°. In this case when the air guide elements are in their end positions, said air guide elements 32, 34, which are coupled by means of the gearwheels 46, 48, 80, can close the air duct completely. Thus, in the end positions the air guide elements 32, 34 serve as closing flaps, while in the intermediate positions said air guide elements take over the air guide function.

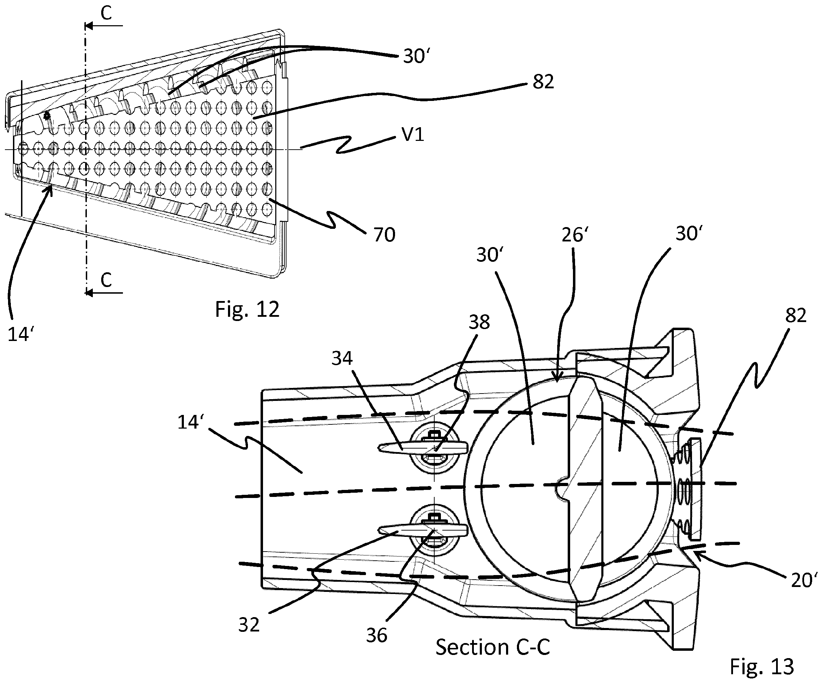

Figures 12 and 13 show an air vent in a third embodiment. This air vent differs from the first embodiment by a different design of the air duct 14' and the roller vent 26'.

The air duct 14' has a cross sectional area that widens along the axis of rotation V1. As can be seen in Figure 12, the diameter of the lamellae 30' of the roller vent 26' increases with the increasing height of the air duct 14. Thus, the lamellae 30' are adapted to the cross sectional area of the air duct 14'. Furthermore, this embodiment comprises a slot-shaped air outlet opening 20', which widens correspondingly and into which an outflow grill 82 is introduced.

In the sectional view in Figure 13, the lamellae 32, 34 are shown in a horizontal position, while the lamellae 30' of the roller vent 26' are shown on the right (in the plan view of the air vent, as can be seen in Figure 12). In this case the view in Figure 13 shows a section along the section line, denoted as C-C in Figure 12. As a result, one of the lamellae 30' of the roller vent 26' is cut in such a way that it is possible to see the lamella 30' located behind. Owing to the increasingly larger cross sectional area and the increasingly larger lamellae 30', the air can be deflected particularly well laterally by means of the roller vent 26' and can be directed, for example, towards a window of a vehicle.

### List of Reference Numerals and Symbols

- 10: air vent
- 12: housing
- 13: front panel of the housing
- 14, 14': air duct
- 15, 15': inclined sections of the air duct
- 16: air inlet end
- 18: air outlet end
- 19: holder
- 20, 20': air outlet opening
- 22, 24: converging inner walls of the housing
- 26, 26': roller vent
- 28: front rotary shaft
- 30, 30': lamellae of the roller vent
- 32: first air guide element/lamella
- 34: second air guide element/lamella
- 36: first rear rotary shaft
- 38: second rear rotary shaft
- 40, 40': control element/control wheel
- 42: first cross-shaped recess
- 44: second cross-shaped recess
- 46: first gearwheel
- 48: second gearwheel
- 50: guide groove
- 52, 52': first segments of the guide groove
- 53: second segments of the guide groove
- 54: additional segments of the guide groove
- 60: coupling element
- 62: first connecting section of the coupling element
- 64: second connecting section of the coupling element
- 66, 66': guide openings of the coupling element
- 70, 70': pivot elements
- 72, 72': pins of the pivot elements
- 80: third gearwheel
- 101, 102, 103: arrow symbols
- A: axis of motion of the coupling element
- B₁, B₂: directions of motion of the control wheel
- L: main direction of flow
- LS: air flow
- H1: first rear axis of rotation
- H2: second rear axis of rotation
- V1: front axis of rotation
- M: center of the control wheel

## Claims

1. Air vent for use in a vehicle, comprising:
- a housing (12) and an air duct (14), defined by the housing (12) and having an air inlet end (16) and an air outlet end (18), wherein an air flow (LS), flowing through the air duct (14), can flow from the air inlet end (16) to the air outlet end (18) along a main direction of flow (L);
- at least one front air guide element (26), which is disposed at the air outlet end (18) in the air duct (14) and which is adjustable about a front axis of rotation (VI) relative to the main direction of flow (L);
- at least one rear air guide element (32, 34), which is disposed in the main direction of flow (L) upstream of the front air guide element (26) in the air duct (14) and which is adjustable about a rear axis of rotation (HI, H2) relative to the main direction of flow (L);
- a control element (40), which is coupled to the at least one front air guide element (26) and to the at least one rear air guide element (32, 34) in such a way that by means of a movement of the control element (40) along a direction of motion (B₁, B₂), the front air guide element (26) can be rotated about the front axis of rotation (VI) and the rear air guide element (32, 34), about the rear axis of rotation (HI, H2).

2. Air vent, as claimed in claim 1, **characterized in that** the at least one front air guide element (26) and/or the at least one rear air guide element (32, 34) is/are formed by means of at least one oblong, flat lamella, which can be inclined into the air flow (LS).

3. Air vent, as claimed in claim 1 or 2, **characterized in that** the control element (40) is a control wheel (40) that can be rotated about a wheel axis.

4. Air vent, as claimed in claim 3, further comprising a coupling element (60) with an engagement projection (63), which is in engagement with a guide groove (50), extending in the control wheel (40), and at least one pivot element (70, 70'), which is operatively connected to the coupling element (60) and acts on the at least one front air guide element (26) and/or the at least one rear air guide element (32, 34), wherein through rotation of the control wheel (40) the engagement projection (63) of the coupling element (60) is guided in the guide groove (50) in such a way that the at least one pivot element (70, 70') can rotate the at least one front air guide element (26) about the front axis of rotation (VI); and/or the at least one rear air guide element (32, 34), about the rear axis of rotation (HI, H2).

5. Air vent, as claimed in claim 4, **characterized in that** the coupling element (60) is moved by guiding its engagement projection (63) in the guide groove (50) of the control wheel (40) in essence along an axis (A), which is perpendicular to the front axis of rotation (V1) and/or rear axis of rotation (HI, H2), and that the at least one pivot element (70, 70') comprises at least one pin (72, 72'), which is received in at least one guide opening (66, 66') of the coupling element (60).

6. Air vent, as claimed in claim 4 or 5, **characterized in that** the guide groove (50) comprises at least one first segment (52, 52') that is designed in such a way that by guiding the engagement projection (63) of the coupling element (60) along the at least one first segment (52, 52'), the coupling element (60) is not moved in essence.

7. Air vent, as claimed in claim 6, **characterized in that** the at least one first segment (52, 52') extends along a circular arc, wherein the center of the circle is on the axis of rotation of the control wheel (40).

8. Air vent, as claimed in any one of the claims 4 to 7, **characterized in that** the guide groove (50) of the control wheel (40) is designed in essence heart shaped.

9. Air vent, as claimed in any one of the preceding claims, **characterized in that** a front rotary shaft (28) of the at least one front air guide element (26) extends along the front axis of rotation (VI) and is in engagement with the control wheel (40).

10. Air vent, as claimed in claim 9, **characterized in that** the at least one front air guide element (26) is formed by a roller vent (26) comprising a plurality of lamellae (30), which are arranged along the front rotary shaft (28) and are at an angle to the front rotary shaft (28).

11. Air vent, as claimed in any one of the preceding claims, **characterized by** a slot-shaped air outlet opening (20), which is arranged at the air outlet end (18) of the air duct (14) and which is formed by converging inner walls (22, 24) of the housing (12).

12. Air vent, as claimed in claim 11 and 12, **characterized in that** the converging inner walls (22, 24) of the housing extend along a circular arc; and the lamellae (30) of the roller vent (26) move along a corresponding circular arc during rotation of the front axis of rotation (28).

13. Air vent, as claimed in any one of the preceding claims, **characterized in that** the cross sectional area of the air duct (14) that is perpendicular to the main direction of flow (L)
widens along the front axis of rotation (VI) and/or the rear axis of rotation (HI, H2).
